# EUROPÄISCHE PATENTANMELDUNG

(11) **EP 3 633 212 A1**
(43) Veröffentlichungstag der Anmeldung: **08.04.2020**
(21) Anmeldenummer: 19199808.7
(22) Anmeldetag: 26.09.2019
(51) Int. Cl.: F16B 2/10, F16B 5/06, E04F 13/00

(54) **KLEMMPROFIL UND HALTEVORRICHTUNG**

(30) Priorität: 05.10.2018 DE 202018105719 U
(71) Anmelder: SCHÜCO International KG, 33609 Bielefeld (DE)
(72) Erfinder: KÜHN, Henning, 57223 Kreuztal (DE); RUDOLPH, Jörg, 57072 Siegen (DE)
(74) Vertreter: Dantz, Jan Henning

(57) **Zusammenfassung**

Die Erfindung betrifft ein Klemmprofil (1) zur Fixierung eines Flächenelementes (60) aus einem biegbaren Material, insbesondere aus einem extrudierten Aluminiumprofil, mit einem leistenförmigen ersten Schenkel (3) und einem leistenförmigen zweiten Schenkel (4), zwischen denen eine Aufnahme (5) zum Festklemmen des Flächenelementes (60) ausgebildet ist, wobei mindestens einer der Schenkel (3, 4) über ein Filmscharnier (6) zum Anklemmen des Flächenelementes (60) biegbar ist, und das Klemmprofil (1) an seinem äußeren Umfang mindestens eine Profilierung (15) zum Fixieren an oder in einem Halteprofil (50) aufweist, wobei an dem Klemmprofil (1) zumindest bereichsweise eine leistenförmige Abdeckung (10, 20, 30, 40) aus einem elastischen Material vorgesehen ist.

## Beschreibung

Die vorliegende Erfindung betrifft ein Klemmprofil zur Fixierung eines Flächenelementes aus einem biegbaren Material, insbesondere aus einem extrudierten Aluminiumprofil, mit einem leistenförmigen ersten Schenkel und einem leistenförmigen zweiten Schenkel, zwischen denen eine Aufnahme zum Festklemmen des Flächenelementes ausgebildet ist, wobei mindestens einer der Schenkel über ein Filmscharnier zum Anklemmen des Flächenelementes biegbar ist, und das Klemmprofil an seinem äußeren Umfang mindestens eine Profilierung zum Fixieren an oder in einem Halteprofil aufweist, und eine Haltevorrichtung.

Die EP 1 276 091 B1 offenbart einen biegsamen Träger für flexible Anzeigen, bei dem eine flexible Anzeige an einem länglichen einstückigen Körper zwischen zwei Schenkeln einklemmbar ist. Solche auch als Tuchhalter bezeichneten Träger können große flexible Flächenelemente spannen. Durch Windkräfte werden die Tuchflächen insbesondere im Bereich des Trägers erheblich belastet, wobei die Anforderung besteht, immer größere Tuchflächen und daraus resultierende Gewebekräfte mit dem Träger fixieren zu können.

Es ist daher Aufgabe der vorliegenden Erfindung, ein Klemmprofil zur Fixierung eines Flächenelementes und eine Haltevorrichtung zu schaffen, die besonders große Flächenelemente spannen und fixieren können.

Diese Aufgabe wird mit einem Klemmprofil mit den Merkmalen des Anspruches 1 sowie einer entsprechenden Haltevorrichtung mit den Merkmalen des Anspruches 11 gelöst.

Bei dem erfindungsgemäßen Klemmprofil ist zwischen zwei Schenkeln eine Aufnahme gebildet, in der ein Flächenelement, beispielsweise ein Gewebe, festgelegt werden kann. An dem Klemmprofil ist dabei zumindest bereichsweise eine leistenförmige Abdeckung aus einem elastischen Material vorgesehen. Das Flächenelement kann dadurch einerseits in der Aufnahme angeklemmt werden, und andererseits kann das Flächenelement zwischen der leistenförmigen Abdeckung aus elastischem Material und einem Halteprofil durchgeführt werden, wobei die Elastizität der Abdeckung die Materialbelastung an dem Flächenelement reduziert. Gerade bei großen Flächenelementen, bei denen die Spannungen durch Windkräfte erheblich sind, kann die Materialbelastung an der Kontaktstelle zwischen Klemmkörper und Halteprofil durch die elastische Abdeckung reduziert werden. Zudem wird auch der Einsatz von Glasfasergeweben ermöglicht, die höhere Zugbelastungen aufnehmen können, aber in dem Kontaktbereich an dem Klemmprofil leichter beschädigt werden können. Dadurch kann ein Ermüdungsbruch durch die wechselnde Belastung an dem Klemmprofil vermieden oder herausgezögert werden.

Vorzugsweise ist die leistenförmige Abdeckung an einer äußeren Kante des Klemmprofils vorgesehen. Die äußere Kante kann beispielsweise ein winkelförmiger Abschnitt des einstückigen Klemmprofils sein.

Das Klemmprofil weist vorzugsweise einen stationären ersten Schenkel auf, der beim Anklemmen des Flächenelementes nicht verschwenkt wird, und einen biegbaren zweiten Schenkel, der beim Anklemmen des Flächenelementes verschwenkt wird. Dabei kann die leistenförmige Abdeckung an einem Ende des stationären Schenkels angeordnet sein, insbesondere an einer Kante des Schenkels.

Die leistenförmige Abdeckung weist vorzugsweise ein gummihaltiges Material auf und kann bevorzugt auch vollständig aus Gummi hergestellt sein. Auch der Einsatz eines elastischen Kunststoffes ist möglich. Die leistenförmige Abdeckung besitzt in jedem Fall eine deutlich höhere Elastizität als das Klemmprofil, das vorzugsweise aus Metall hergestellt ist, beispielsweise aus einem extrudierten Aluminiumprofil. Auch eine Herstellung des Klemmprofils aus glasfaserverstärktem Kunststoff ist möglich. Für die leistenförmige Abdeckung können extrudierte Profile aus Kunststoff, insbesondere EPDM, TPM, TPU (thermoplastisches Polyurethan) oder anderen Materialien eingesetzt werden.

Die Abdeckung kann wahlweise mit dem Klemmprofil verklebt sein oder im Spritzgussverfahren angespritzt werden. Zudem kann die Abdeckung ein Fußelement umfassen, das mechanisch an dem Klemmprofil festgelegt ist, insbesondere durch eine Rastverbindung oder eine klemmende Fixierung. Ferner ist es möglich, statt einer einzigen leistenförmigen Abdeckung auch zwei voneinander beabstandete leistenförmige Abdeckungen aus einem elastischen Material in dem Klemmkörper vorzusehen, was die Variabilität bei der Befestigung des Flächenelementes erhöht. Dann kann das Flächenelement auch in den Bereichen vorbeigeführt werden, an denen entsprechende Abdeckungen vorgesehen sind.

Für eine stabile Fixierung des Flächenelementes kann mindestens einer der Schenkel im Wesentlichen L-förmig ausgebildet sein, wobei die Aufnahme für das Flächenelement bei geschlossenen Schenkeln vorzugsweise winkelförmig ausgebildet ist. Dadurch kann das Flächenelement mit hohen Haltekräften durch das Klemmprofil gehalten werden.

Bei der erfindungsgemäßen Haltevorrichtung werden mindestens zwei Halteprofile eingesetzt, an denen jeweils mindestens ein erfindungsgemäßes Klemmprofil fixiert ist, die ein Flächenelement zwischen den Halteprofilen spannen. Das Flächenelement kann als Gewebe ausgebildet sein, vorzugsweise als Glasfasergewebe, das auch hohe Membrankräfte übertragen/Windlasten aufnehmen kann. Die Halteprofile können dabei einen umlaufenden Rahmen ausbilden, der das Flächenelement an allen vier Seiten durch ein oder mehrere Klemmprofile hält. Die leistenförmigen Klemmprofile können beispielsweise eine Länge zwischen 1 cm und 50 cm aufweisen, um das Flächenelement an den durchgängigen Halteprofilen zu fixieren.

Die Erfindung wird nachfolgend anhand mehrerer Ausführungsbeispiele mit Bezug auf die beigefügten Zeichnungen näher erläutert. Es zeigen:
- Figur 1: eine Querschnittsansicht durch ein Klemmprofil gemäß einem ersten Ausführungsbeispiel;
- Figur 2: eine Ansicht des Klemmprofils der Figur 1 in einer montierten Position;
- Figur 3: eine Ansicht eines zweiten Ausführungsbeispiels eines Klemmprofils;
- Figur 4: eine Ansicht eines dritten Ausführungsbeispiels eines Klemmprofils, und
- Figur 5: eine Ansicht eines vierten Ausführungsbeispiels eines Klemmprofils.

Ein Klemmprofil 1 umfasst einen Formkörper 2 aus einem biegbaren Material, insbesondere aus Metall, beispielsweise einem extrudierten Aluminiumprofil. An dem Formkörper 2 erstrecken sich zwei integral ausgebildete leistenförmige Schenkel 3 und 4, die zwischen sich eine Aufnahme 5 zum Anklemmen eines Flächenelementes ausbilden. Dabei ist ein erster Schenkel 3 stationär ausgebildet, also wird nicht oder nur geringfügig beim Anklemmen des Flächenelementes verbogen, während ein zweiter Schenkel 4 über ein Filmscharnier 6 in Form eines Abschnittes mit geringerer Dicke mit dem Formkörper 2 verbunden ist.

Der erste Schenkel 3 weist einen verdickten Endabschnitt auf, der im Querschnitt winkelförmig ausgebildet ist, so dass ein nach innen zu dem zweiten Schenkel 4 ragender Steg 7 vorgesehen ist. An dem zweiten Schenkel 4, der im Querschnitt ebenfalls winkelförmig ausgebildet ist, befindet sich eine Stirnseite 8 benachbart zu dem Steg 7, wobei sich von der Stirnseite 8 ein abgewinkelter Vorsprung 9 im Wesentlichen parallel zur Längsrichtung des Schenkels 4 erstreckt. Durch eine Rastnase 8a wird sichergestellt, dass das Flächenelment an dem gegenüberligenden Steg 7 verliersicher geklemmt wird. Dadurch ist die Aufnahme 5 bei geschlossenem Schenkel 4 nicht linear, sondern winkelförmig ausgebildet, und das Flächenelement wird an der Aufnahme 5 entsprechend winkelförmig aus der Aufnahme 5 herausgeführt. Im konkreten Beispiel sind zwei Winkel vorgesehen. Auch andere Geometrien zum Fixieren des Flächenelementes in der Aufnahme 5 können vorgesehen werden.

Das Klemmprofil 1 weist ferner eine oder mehrere Profilierungen 15, insbesondere Vorsprünge oder Zähne, auf, die an einem Halteprofil fixierbar sind. Auf der zu den Profilierungen 15 gegenüberliegenden Seite ist an dem ersten Schenkel 3 eine Abdeckung 10 aus einem elastischen Material, insbesondere einem gummihaltigen Material, speziell ein TPU-Kunststoff, vorgesehen, die weicher ausgebildet ist als der Formkörper 2 des Klemmprofils 1. Die Abdeckung 10 ist winkelförmig mit einem ersten Schenkel 11 und einem zweiten Schenkel 12 ausgebildet, die an einer Kante des Schenkels 3 anliegen und dort angeklebt oder im Spritzgussverfahren angespritzt sind. Die Abdeckung 10 kann eine Dicke zwischen 0,1 mm bis 5 mm, insbesondere 0,4 mm bis 3 mm, besitzen.

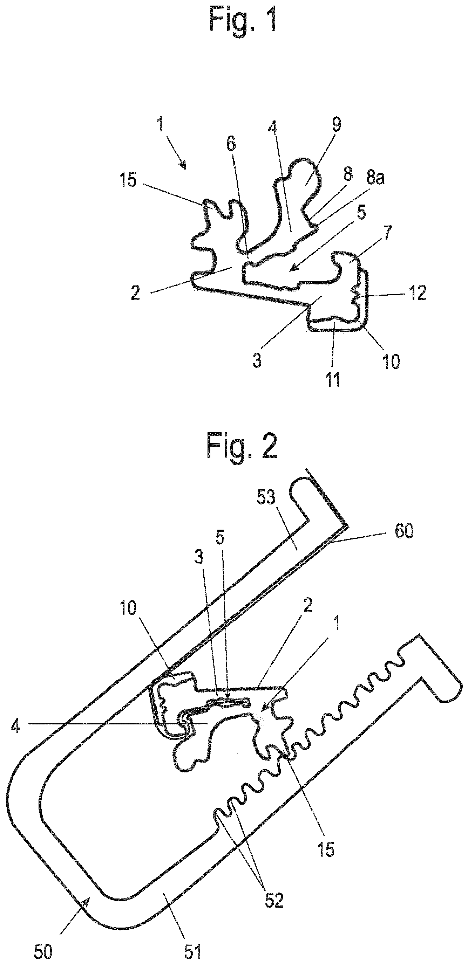

In Figur 2 ist die montierte Position des Klemmprofils gezeigt, an dem ein Flächenelement 60 gehalten ist. Das Flächenelement 60 kann ein Gewebe, beispielsweise mit Glasfasern, sein, das in Form eines Tuches an zwei oder vier Seiten gespannt ist.

Eine Haltevorrichtung für ein Flächenelement 60 weist Halteprofile 50 auf, die an zwei oder mehr Seiten, insbesondere an vier Seiten, zu einem Rahmen zusammengesetzt sind, und an jeder Seite ein oder mehrere Klemmprofile 1 aufweisen, um das Flächenelement 60 zu spannen. Das Halteprofil 50 weist eine nutförmige Aufnahme zwischen zwei Schenkeln 51 und 53 auf, in die das Klemmprofil 1 eingefügt ist. An zumindest einem Schenkel 51 ist eine Verzahnung 52 vorgesehen, die in Eingriff mit der Profilierung 15 in Form eines Vorsprunges gelangen kann. Durch die Verzahnung 52 kann das Klemmprofil 1 in verschiedenen Position in dem Halteprofil 50 festgelegt werden, wobei zur Montage das Klemmprofil 1 in das Halteprofil 50 eingeschlagen werden kann, um das Flächenelement 60 zu spannen.

Das Flächenelement 60 ist in der Aufnahme 5 fixiert und dann um den ersten Schenkel 3 herum geführt, an dem die Abdeckung 10 aus flexiblem Material vorgesehen ist. Das Flächenelement 60 ist somit zwischen der flexiblen Abdeckung 10 und dem Schenkel 53 des Halteprofils 50 durchgeführt, so dass bei hohen Zugkräften an dem Flächenelement 60, beispielsweise durch Windlasten, die Abdeckung 10 keine Schnittkante ausbildet, sondern eine gewisse Nachgiebigkeit besitzt, die eine Beschädigung des Flächenelementes 60 in dem Kontaktbereich verhindert.

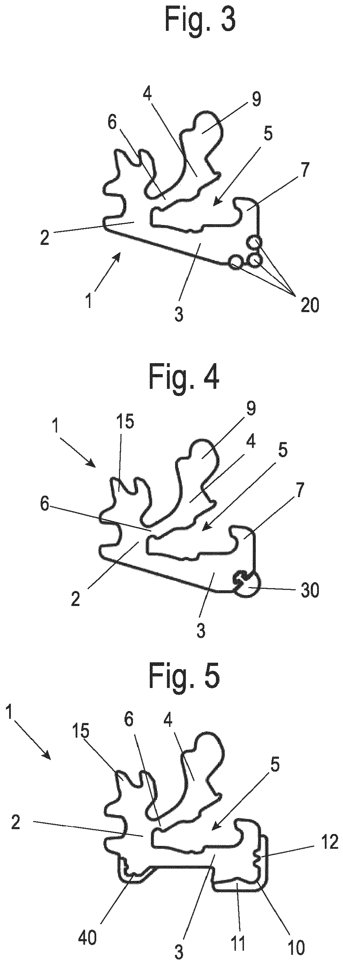

In den Figuren 3 bis 5 sind modifizierte Ausgestaltungen des Klemmprofils 1 gezeigt, bei dem der Formkörper 2 wie bei dem Ausführungsbeispiel der Figur 1 ausgebildet ist, bis auf die Anordnung und Gestaltung der flexiblen Abdeckungen.

In Figur 3 ist eine flexible Abdeckung 20 in Form von Schnüren gezeigt, die im Querschnitt kreisförmig ausgebildet sind und teilweise an einer Oberfläche des Schenkels 3 eingebettet sind. Die Schnüre können über Klebemittel und/oder klemmend an dem Formkörper 2 fixiert sein. Zudem kann die Geometrie der Schnüre und deren Anzahl variiert werden.

In Figur 4 ist eine Abdeckung 30 aus einem elastischen Material in Form eines Profils gezeigt, beispielsweise aus EPDM, TPE, TPU oder einem anderen elastischen Material, das ein Fußelement aufweist, das an einer hinterschnittenen Nut des Formkörpers 2 fixiert ist. Das Fußelement kann somit mechanisch die Abdeckung 30 fixieren, wobei optional auch eine Verklebung zwischen Formkörper 2 und Abdeckung 30 vorgesehen sein kann.

In Figur 5 ist eine Ausführungsform eines Klemmprofils 1 gezeigt, bei der neben der in Figur 1 beschriebenen Abdeckung 10 eine weitere zweite Abdeckung 40 beabstandet von der Abdeckung 10 vorgesehen ist. Die Abdeckung 40 befindet sich an einer weiteren Kante des Formkörpers 2, so dass die Einbauposition des Klemmkörpers 1 variiert werden kann, um optional das Flächenelement 60 entweder im Bereich der Abdeckung 40 oder der Abdeckung 10 vorbeiführen zu können.

Die dargestellten Ausführungsbeispiele können auch miteinander kombiniert werden, beispielsweise können an unterschiedlichen Kanten unterschiedliche Abdeckungen 10, 20, 30, 40 vorgesehen sein. Zudem kann die Profilierung 15 zur Fixierung des Klemmprofils 1 an dem Halteprofil 50 abgewandelt werden.

### Bezugszeichenliste

- 1: Klemmprofil
- 2: Formkörper
- 3: Schenkel
- 4: Schenkel
- 5: Aufnahme
- 6: Filmscharnier
- 7: Steg
- 8: Stirnseite
- 8a: Rastnase
- 9: Vorsprung
- 10: Abdeckung
- 11: Schenkel
- 12: Schenkel
- 15: Profilierung
- 20: Abdeckung
- 30: Abdeckung
- 40: Abdeckung
- 50: Halteprofil
- 51: Schenkel
- 52: Verzahnung
- 53: Schenkel
- 60: Flächenelement

## Patentansprüche

1. Klemmprofil (1) zur Fixierung eines Flächenelementes (60) aus einem biegbaren Material, insbesondere aus einem extrudierten Aluminiumprofil, mit einem leistenförmigen ersten Schenkel (3) und einem leistenförmigen zweiten Schenkel (4), zwischen denen eine Aufnahme (5) zum Festklemmen des Flächenelementes (60) ausgebildet ist, wobei mindestens einer der Schenkel (3, 4) über ein Filmscharnier (6) zum Anklemmen des Flächenelementes (60) biegbar ist, und das Klemmprofil (1) an seinem äußeren Umfang mindestens eine Profilierung (15) zum Fixieren an oder in einem Halteprofil (50) aufweist, **dadurch gekennzeichnet, dass** an dem Klemmprofil (1) zumindest bereichsweise eine leistenförmige Abdeckung (10, 20, 30, 40) aus einem elastischen Material vorgesehen ist.

2. Klemmprofil nach Anspruch 1, **dadurch gekennzeichnet, dass** die leistenförmige Abdeckung (10, 20, 30, 40) an einer äußeren Kante des Klemmprofils (1) vorgesehen ist.

3. Klemmprofil nach Anspruch 1 oder 2, **dadurch gekennzeichnet, dass** das Klemmprofil (1) einen stationären ersten Schenkel (3) und einen biegbaren zweiten Schenkel (5) aufweist und die Abdeckung (10, 20, 30, 40) an dem Ende des stationären ersten Schenkels (3) vorgesehen ist.

4. Klemmprofil nach einem der vorhergehenden Ansprüche, **dadurch gekennzeichnet, dass** die leistenförmige Abdeckung (10, 20, 30, 40) ein kunststoffhaltiges, insbesondere gummihaltiges Material umfasst.

5. Klemmprofil nach einem der vorhergehenden Ansprüche, **dadurch gekennzeichnet, dass** die leistenförmige Abdeckung (10) im Querschnitt winkelförmig ausgebildet ist.

6. Klemmprofil nach einem der vorhergehenden Ansprüche, **dadurch gekennzeichnet, dass** die Abdeckung (10, 20, 30, 40) mit dem Klemmprofil (1) verklebt ist.

7. Klemmprofil nach einem der vorhergehenden Ansprüche, **dadurch gekennzeichnet, dass** die Abdeckung (10, 20, 30, 40) im Spritzgussverfahren an dem Klemmprofil (1) angebracht ist.

8. Klemmprofil nach einem der vorhergehenden Ansprüche, **dadurch gekennzeichnet, dass** die Abdeckung (30) ein Fußelement umfasst, das an dem Klemmprofil verrastet oder klemmend festgelegt ist.

9. Klemmprofil nach einem der vorhergehenden Ansprüche, **dadurch gekennzeichnet, dass** zwei voneinander beabstandete Abdeckungen (10, 40) aus einem elastischen Material vorgesehen sind.

10. Klemmprofil nach einem der vorhergehenden Ansprüche, **dadurch gekennzeichnet, dass** mindestens einer der Schenkel (3, 4) im Querschnitt im Wesentlichen L-förmig ausgebildet ist und die Aufnahme (5) in dem geschlossenen Zustand der Schenkel (3, 4) winkelförmig ausgebildet ist.

11. Haltevorrichtung mit mindestens zwei Halteprofilen (50), an denen jeweils mindestens ein Klemmprofil (1) nach einem der vorhergehenden Ansprüche, fixiert ist, die ein Flächenelement (60) zwischen den Halteprofilen (50) spannen.

12. Haltevorrichtung nach Anspruch 11, **dadurch gekennzeichnet, dass** das Flächenelement (60) ein Glasfasergewebe enthält.

13. Haltevorrichtung nach Anspruch 11 oder 12, **dadurch gekennzeichnet, dass** die Halteprofile (50) einen Rahmen ausbilden und das Flächenelement (60) an allen vier Seiten über Klemmprofile (1) gespannt ist.
